# EUROPEAN PATENT APPLICATION

(11) **EP 2 623 010 A2**
(43) Date of publication of application: **07.08.2013**
(21) Application number: 13153726.8
(22) Date of filing: 01.02.2013
(51) Int. Cl.: A47L 9/28

(54) **Robot cleaner**

(30) Priority: 04.02.2012 KR 20120011534
(71) Applicant: LG Electronics, Inc., Seoul, 150-721 (KR)
(72) Inventor: Sung, Chulmo, 153-802 Seoul (KR); Lee, Seongsoo, 153-802 Seoul (KR); Noh, Dongki, 153-802 Seoul (KR); Yi, Donghoon, 153-802 Seoul (KR); Baek, Seungmin, 153-802 Seoul (KR)
(74) Representative: Ter Meer Steinmeister & Partner

(57) **Abstract**

Provided is a robot cleaner. The robot cleaner includes a casing (10) including a moving unit (20), an image input unit (40) disposed in the casing (10), the image input unit (40) including a plurality of light emitting parts (41,42) for emitting light toward an obstacle and an image sensor (43) for acquiring a 3D image of the obstacle onto which light is emitted from the plurality of light emitting parts (41,42), and a main control unit (60) extracting 3D data with respect to the obstacle from the 3D image of the obstacle acquired by the image input unit (49) to control the moving unit (20).

## Description

### BACKGROUND

The present disclosure relates to a robot cleaner.

Robot cleaners are home appliances for performing a cleaning operation while automatically moving. Such a robot cleaner includes all sorts of sensors for avoiding interference or contact with obstacles during the movement. For example, the robot cleaner may include an infrared sensor for sensing front obstacles and a cliff sensor for sensing cliffs of a floor surface.

In recently, the robot cleaner includes a camera for photographing images of the obstacles. Thus, the robot cleaner extracts data from the images photographed by the camera to recognize the obstacles. Particularly, to extract 3-dimensional (3D) data with respect to the obstacles, a special camera which can photograph 3D images, for example, a stereo vision camera or a time of flight (TOF) camera is provided in the robot cleaner.

However, such a robot cleaner according to the related art may have following limitations.

In the robot cleaner according to the related art, a specific camera having a relatively high price is mounted to photograph 3D images of obstacles. Thus, as the specific camera is applied, the products may increase in unit cost.

Also, in case of the stereo vision camera, resolution may be deteriorated in proportional to a distance between the camera and an obstacle. Also, in case of the TOP camera, resolution itself is lower than that of the stereo vision camera. Thus, it is impossible to acquire more stable and accurate 3D data of the obstacle.

Also, a sensor for sensing a front obstacle and a sensor for sensing cliffs on a floor surface may be separately provided. Thus, the product may be complicated in configuration.

### SUMMARY

In one embodiment, a robot cleaner may include: a casing including a moving unit; an image input unit disposed in the casing, the image input unit including a plurality of light emitting parts for emitting light toward an obstacle and an image sensor for acquiring a 3D image of the obstacle onto which light is emitted from the plurality of light emitting parts; and a main control unit extracting 3D data with respect to the obstacle from the 3D image of the obstacle acquired by the image input unit to control the moving unit.

In another embodiment, a robot cleaner may include: a casing defining an outer appearance thereof; a moving unit moving the casing; a main control unit controlling the moving unit; a laser diode disposed in the casing to emit laser light onto an obstacle; and a camera disposed in the casing to photograph a 3D image of the obstacle, wherein the main control unit extracts 3D data with respect to the obstacle from the 3D image of the obstacle photographed by the camera to control an operation of the moving unit on the basis of the 3D data.

In further another embodiment, a robot cleaner performing a cleaning operation for suctioning foreign substances while being moved may include: an image input unit including first and second light emitting parts emitting light having a preset pattern onto an obstacle disposed at a font side in a moving direction of the robot cleaner and an image sensor photographing a 3D image of the obstacle by using the light emitted from the first and second light emitting parts; an image control part controlling an operation of the image input unit; and a main control unit extracting 3D data with respect to the obstacle from the 3D image of the obstacle acquired by the image input unit.

The first and second light emitting parts may be symmetrical to each other with respect to a center of the image sensor.

The image input unit may further include a band pass filter which transmits light having a specific wavelength of the light emitted from the plurality of light emitting parts, and the image sensor may receive the light having the specific wavelength passing through the band pass filter.

In still further another embodiment, a robot cleaner may include: a casing defining an outer appearance thereof; a moving unit providing a driving force for moving the casing; a suction unit providing a driving force for suctioning foreign substances into the casing; a main control unit controlling operations of the moving unit and the suction unit; a laser diode disposed in the casing to emit laser light having a preset pattern onto the obstacle; a camera disposed in the casing to photograph a 3D image of the obstacle; and an image control unit controlling operations of the laser diode and the camera, the image control unit transmitting the 3D image photographed by the camera into the main control unit, wherein the main control unit extracts 3D data with respect to the obstacle from the 3D image of the obstacle photographed by the camera to control the operation of the moving unit on the basis of the extracted 3D data.

The laser diode may be provided in two so that the two laser diodes are symmetrical to each other with respect to the camera.

The robot cleaner may further include a band pass filter for transmitting light having a specific wavelength of the light emitted from the laser diode.

The band pass filter may transmit light having an infrared wavelength, and the camera may receive infrared light.

The details of one or more embodiments are set forth in the accompanying drawings and the description below. Other features will be apparent from the description and drawings, and from the claims.

### BRIEF DESCRIPTION OF THE DRAWINGS

Fig. 1 is a front view of a robot cleaner according to an embodiment.

Fig. 2 is a schematic block diagram of the robot cleaner according to an embodiment.

Fig. 3 is a view illustrating a process of acquiring image date with respect to an obstacle by the robot cleaner according to an embodiment.

Fig. 4 is a schematic block diagram of a robot cleaner according to another embodiment.

### DETAILED DESCRIPTION OF THE EMBODIMENTS

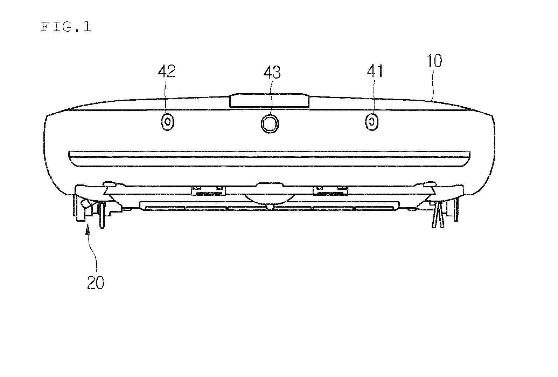

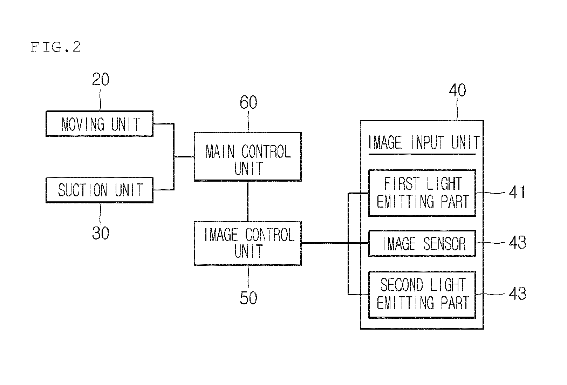

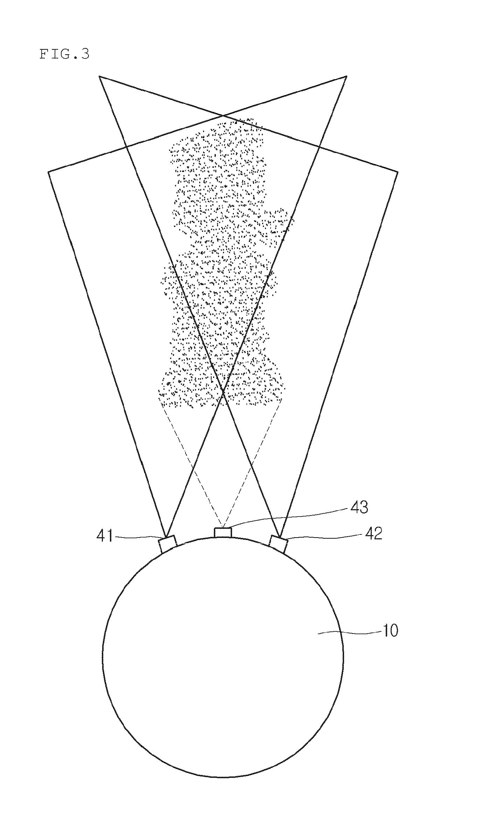

Fig. 1 is a front view of a robot cleaner according to an embodiment. Fig. 2 is a schematic block diagram of the robot cleaner according to an embodiment. Fig. 3 is a view illustrating a process of acquiring image date with respect to an obstacle by the robot cleaner according to an embodiment.

Referring to Figs. 1 and 2, a robot cleaner according to an embodiment may include a casing 10 defining an outer appearance thereof. Various components constituting the robot cleaner may be provided within the casing 10. For example, the casing 10 may have a polyhedral shape, but is not limited thereto. Also, although not shown, a suction opening for suctioning foreign substances may be defined in a bottom surface of the casing 10.

The robot cleaner may further a moving unit 20. The moving unit 20 is a moving part for moving the robot cleaner. For example, the moving unit 20 may include a driving motor (not shown) and a driving wheel (not shown).

Also, the robot cleaner may further include a suction unit 30 for suctioning foreign substances. For example, the suction unit 30 may include a suction motor (not shown) of suctioning foreign substances and a suction fan (not shown) rotated by the suction motor. Thus, when the suction unit 30 is operated, foreign substances may be suctioned into the casing 10 through the suction opening.

The robot cleaner according to the current embodiment may further include an image input unit 40. The image input unit 40 may acquire 3D images of an obstacle. The image input unit 40 may include two light emitting parts 41 and 42 and one image sensor 43.

In detail, the light emitting parts 41 and 42 may include first and second light emitting parts 41 and 42. A laser diode for emitting a laser beam toward an obstacle may be used as each of the first and second light emitting parts 41 and 42. Also, the image sensor 43 acquires the 3D images of the obstacle onto which light is emitted from the first and second light emitting parts 41 and 42. A laser camera for photographing the images of the obstacle onto which light is emitted from the first and second light emitting parts 41 and 42 may be used as the image sensor 43.

Although the plurality of light emitting parts are provided in the casing 10 in the current embodiment, the present disclosure is not limited thereto. For example, only one light emitting part may be provided in the casing 10. In this case, the light emitting part may be installed on the moving unit to increase an irradiation region of the light emitting part and also be movably disposed within the casing 10.

The image sensor 43 may be disposed on a side of the case 10, for example, a front surface of the casing 10. As shown in Fig. 3, when the casing 10 has a flat cylindrical shape with a circular sectional area, the image sensor 43 may be disposed on the outermost side in a moving direction on an edge of the casing 10. Also, the first and second light emitting parts 41 and 42 may be disposed on the edge of the casing 10 so that the first and second light emitting parts 41 and 42 are symmetrical to each other with respect to a center of the image sensor 43. That is, the image sensor 43 may be disposed between the first light emitting part 41 and the second light emitting part 42. Here, the first and second light emitting parts 41 and 42 and the image sensor 43 may be horizontally or vertically disposed in a line. The first light emitting part 41 and the second light emitting part 42 may be disposed spaced apart from each other. Here, a portion of an irradiation region in which light is emitted from the first light emitting part 41 may overlap an irradiation region in which light is emitted from the second light emitting part 42.

Also, the robot cleaner may further include an image control unit 50 and a main control unit 60. The image control unit 50 controls an operation of the image input unit 40 to transmit the 3D image sensed by the image input unit 40, substantially, the image sensor 43 into the main control unit 60. The main control unit 60 may control operations of the moving unit 20 and the suction unit 30. Also, the main control unit 60 may extract 3D data with respect to the obstacle from the 3D image transmitted from the image control unit 50. For example, the main control unit 60 may include a structure light distance measurement device for analyzing a reflection pattern of light reflected by the obstacle from the 3D image received into the image sensor 43. Also, the main control unit 60 may control the operation of the moving unit 20 so that the movement of the casing 10 does not interfere with the obstacle on the basis of the extracted 3D data with respect to the obstacle.

Hereinafter, an operation of the robot cleaner according to the current embodiment will be described.

First, the moving unit 20 and the suction unit 30 are operated to start movement of the casing 10 and the suction of foreign substances. Thus, a cleaning operation for suctioning the foreign substances is performed while the casing 10 is moved.

Then, the image input unit 40, i.e., the first and second light emitting parts 41 and 42 and the image sensor 43 are operated to acquire 3D image of an obstacle. That is, as shown in Fig. 3, the first and second light emitting parts 41 and 42 may emit light onto the obstacle, and the image sensor 43 may photograph the obstacle to acquire a 3D image.

Next, the main control unit 60 extracts 3D data with respect to the obstacle from the 3D image of the obstacle transmitted from the image control unit 50. Also, the main control unit 60 controls operations of the moving unit 20 and the suction unit 30 so that movement of the casing 10 does not interfere with the obstacle on the basis of the 3D data with respect to the obstacle. Thus, the cleaning operation may be performed without bumping with the obstacle while the casing 10 is moved.

In the current embodiment, a relatively long focus distance may be secured by using the light emitting parts 41 and 42 and the image sensor 43 which are relatively inexpensive than that of a special camera for photographing a general 3D image. Also, when the light emitted from the first and second light emitting parts 41 and 42 is inclined downward, a 3D image with respect to a floor surface along which the casing 10 is moved may be photographed, and thus, 3D data of the floor surface may be acquired.

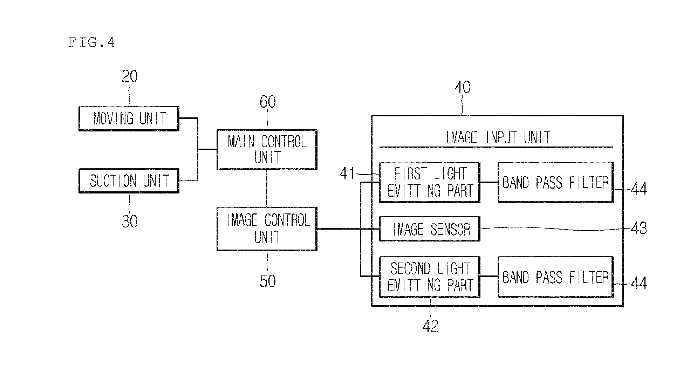

Fig. 4 is a schematic block diagram of a robot cleaner according to another embodiment.

The same components as those of the foregoing embodiment will be derived from Figs. 1 to 3, and thus detailed descriptions thereof will be omitted.

Referring to Fig. 4, an image input unit 40 according to the current embodiment may further include a band pass filter 44. The band pass filter 44 may transmit only light having a predetermined wavelength of light emitted from first and second light emitting parts 41 and 42. For example, an infrared band pass filter which transmits only light having an infrared wavelength of the light emitted from the first and second light emitting parts 41 and 42 may be used as the band pass filter 44. Thus, only infrared light of the light emitted from the first and second light emitting parts 41 and 42 may pass through the band pass filter 44 and then be emitted toward an obstacle. Then, the infrared light may be reflected by the obstacle and received into the image sensor 43. Also, an infrared camera which is capable of receiving the infrared light may be used as the image sensor 43.

In the current embodiment, since only the infrared light of the light emitted from the first and second light emitting parts 41 and 42 is emitted toward the obstacle, the light emitted from the first and second light emitting parts 41 and 42 is not recognized by a user during the cleaning operation of the robot cleaner. Also, in case where the image sensor is the infrared camera, an image acquisition error due to light having a visible-light wavelength except the light emitted from the first and second light emitting parts may be reduced.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A robot cleaner comprising:
a casing comprising a moving unit;
an image input unit disposed in the casing, the image input unit comprising a plurality of light emitting parts for emitting light toward an obstacle and an image sensor for acquiring a 3D image of the obstacle onto which light is emitted from the plurality of light emitting parts, or
a laser diode disposed in the casing to emit laser light onto an obstacle and a camera disposed in the casing to photograph a 3D image of the obstacle; and
a main control unit configured to extract 3D data with respect to the obstacle from the 3D image of the obstacle acquired by the image input unit or photographed by the camera to control the moving unit.

2. The robot cleaner according to claim 1, wherein the plurality of light emitting parts comprise a first light emitting part and a second light emitting part, and
the image sensor is disposed between the first light emitting part and the second light emitting part.

3. The robot cleaner according to claim 2, wherein the plurality of light emitting parts and the image sensor are vertically or horizontally disposed in a line.

4. The robot cleaner according to claim 2 or 3, wherein a portion of an irradiation region of the light emitted from the first light emitting part overlaps an irradiation region of the light emitted from the second light emitting part.

5. The robot cleaner according to any one of the preceding claims, wherein the image input unit further comprises a band pass filter which transmits light having a specific wavelength of the light emitted from the plurality of light emitting parts, and
the image sensor receives the light having the specific wavelength passing through the band pass filter.

6. The robot cleaner according to claim 5, wherein the band pass filter transmits light having an infrared wavelength region, and
the image sensor comprises an infrared camera.

7. The robot cleaner according to any one of the preceding claims, wherein each of the plurality of light emitting parts comprises a laser diode, and
the image sensor comprises a laser camera.

8. A robot cleaner comprising:
a casing defining an outer appearance thereof;
a moving unit configured to move the casing;
a main control unit configured to control the moving unit;
a laser diode disposed in the casing to emit laser light onto an obstacle; and
a camera disposed in the casing to photograph a 3D image of the obstacle,
wherein the main control unit extracts 3D data with respect to the obstacle from the 3D image of the obstacle photographed by the camera to control an operation of the moving unit on the basis of the extracted 3D data.

9. The robot cleaner according to claim 1 or 8, wherein the laser diode is provided in plurality in the casing, and
the camera is disposed between the plurality of laser diodes.

10. The robot cleaner according to claim 1, 8 or 9, further comprising a moving unit configured to move the laser diode to increase an irradiation region of the laser diode.

11. The robot cleaner according to any one of claims 1 or 8 to 10, further comprising a band pass filter configured to transmit light having a specific wavelength of the light emitted from the laser diode.

12. The robot cleaner according to claim 11, wherein the band pass filter transmits light having an infrared wavelength, and
the camera receives infrared light.
